# EUROPÄISCHE PATENTANMELDUNG

(11) **EP 1 139 603 A1**
(43) Veröffentlichungstag der Anmeldung: **04.10.2001**
(21) Anmeldenummer: 00106565.5
(22) Anmeldetag: 27.03.2000
(51) Int. Cl.: H04L 12/24, G06F 17/30, H04L 12/26

(54) **Verfahren und Vorrichtung zur Analyse von Daten**

(71) Anmelder: Tektronix, Inc., Beaverton, OR 97077-0001 (US)
(72) Erfinder: Jäkel, Torsten, Dipl.-Ing., D-12683 Berlin (DE)
(74) Vertreter: Schurack, Eduard F.

(57) **Zusammenfassung**

Die vorliegende Erfindung betrifft ein Verfahren zur Analyse von Daten, folgende Schritte umfassend: a) Einlesen der unstrukturierten Daten in einen Datenspeicher (46, 72, 74); b) Vergleichen der unstrukturierten Daten mit einer Strukturbeschreibung zur Identifizierung von Bestandteilen der unstrukturierten Daten; c)Initialisierung einer Adressierungslogik (54, 78) entsprechend den identifizierten Bestandteilen der unstrukturierten Daten. Sie betrifft weiterhin eine Vorrichtung zum Analysieren von Daten mit einem Datenspeicher (46, 72, 74), in dem unstrukturierte Daten ablegbar sind, einem Strukturbeschreibungsspeicher (50, 66), in dem eine Strukturbeschreibung ablegbar ist, einer Adressierungsschaltung (54, 78), die ein gezieltes Zugreifen auf einzelne Bestandteile der Daten des Datenspeichers (46, 72, 74) ermöglicht, einem Komparator, der einen Vergleich von im Strukturbeschreibungsspeicher (50, 66) abgelegten Daten mit im Datenspeicher (46, 72, 74) abgelegten Daten ermöglicht, und entsprechende Adressierungsinformation bezogen auf den Datenspeicher (46, 72, 74) in der Adressierungsschaltung (54, 78) ablegt, und einem Register (56, 90), das einerseits mit der Adressierungsschaltung (54, 78) verbunden ist und andererseits als Interface für Zugriffe auf die Daten im Datenspeicher (46, 72) von außen dient.

## Beschreibung

Die vorliegende Erfindung betrifft ein Verfahren zum Analysieren von Daten sowie eine korrespondierende Vorrichtung.

In vielen Bereichen der Informationsverarbeitung müssen Datenstrukturen analysiert werden. Die Analyse erfolgt anhand vorgegebener Beschreibungen mit dem Ziel, die Datenstruktur zu erkennen, die einzelnen Elemente als Bestandteile einer Nachricht separat verarbeitbar zu machen und die Werte der Elemente weiter zu verwenden. Solche Datenstrukturen können von unterschiedlichen Quellen generierte beliebige Bit-Folgen sein.

Vor allem in der Telekommunikation ergeben sich hohe Datenübertragungsraten solcher Bit-Folgen in Form von Protokoll-Nachrichten, wobei das zugehörige Protokoll die Struktur der Daten beschreibt. Hierbei werden die Daten zerlegt in sogenannte Protokoll-Dateneinheiten (PDU, Protocol Data Unit).

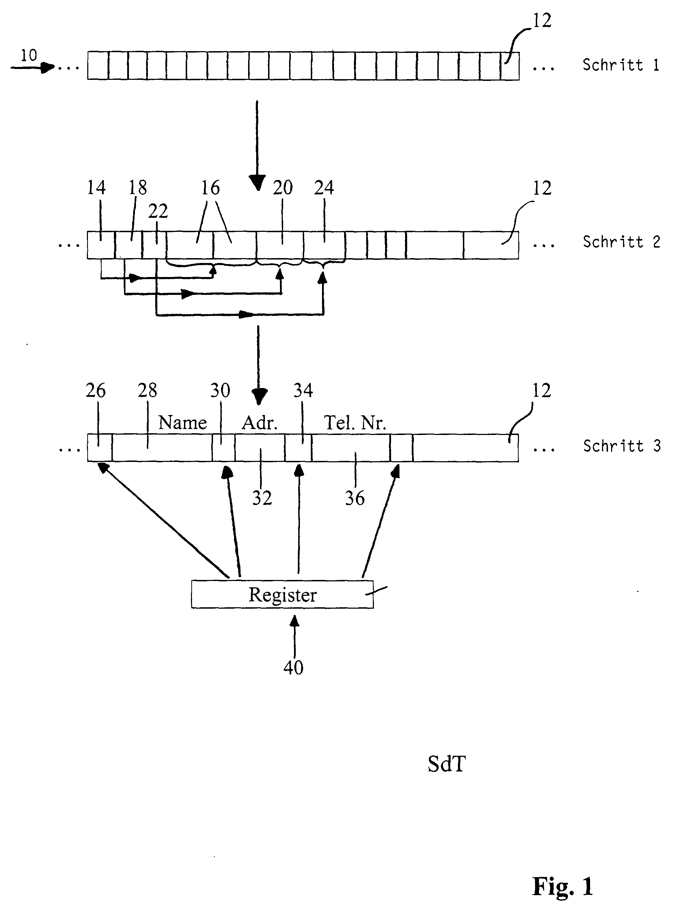

Fig. 1 zeigt wie zur Analyse Der Daten im Stand der Technik vorgegangen wird: Zunächst werden Daten 10 unstrukturiert, d.h. ohne Ordnung, letztlich nur in der Reihenfolge ihrer Übertragung in einem Speicherbaustein 12, vorzugsweise in einem RAM, abgelegt. Die unstrukturierten Daten werden softwaremäßig mit einer Strukturbeschreibung, beispielsweise einer Protokollbeschreibung, verglichen. Entsprechend dem Vergleichsergebnis werden den einzelnen Daten Zusammengehörigkeiten und Bedeutungen zugeordnet. Beispielsweise legen die Daten im Feld 14 von Schritt 2 für die Daten von Feld 16 die Bedeutung "Name" fest, die Daten von Feld 18 weisen den Daten von Feld 20 die Bedeutung "Adresse" zu, während die Daten 22 den Daten im Feld 24 die Bedeutung "Telefonnummer" zuweisen. Entsprechend des Vergleichsfortschritts wird die ungeordnete Datenstruktur sequentiell per Software abgearbeitet und schrittweise die Protokollstruktur, siehe Schritt 3 von Fig. 1, aufgebaut. In dieser Struktur sind die Daten nunmehr wunschgemäß geordnet und zwar weist ein Feld 26 die im Feld 28 folgenden Daten als Name aus, ein Feld 30 die im Feld 32 folgenden Daten als Adresse sowie ein Feld 34 die im Feld 36 folgenden Daten als Telefonnummer. Über ein Register 38 kann nunmehr, wie durch die Pfeile angedeutet, ein Zugriff auf die geordneten Daten erfolgen. Da die Daten geordnet sind, kann Register 38 immer auf dieselben Positionen zugreifen, wenn eine bestimmte Art von Informationen am Anschluß 40 abgefragt wird.

Der Nachteil bei dieser aus dem Stand der Technik bekannten Vorgehensweise liegt in dem hohen Zeit- und Rechenaufwand, den diese Art des Aufbereitens der Daten erfordert.

Der vorliegenden Erfindung liegt daher die Aufgabe zugrunde, ein Verfahren bereitzustellen, daß diese Nachteile beseitigt, insbesondere eine Möglichkeit eröffnet, schneller auf die Daten zugreifen zu können.

Zur Lösung dieses Problems schlägt die vorliegende Erfindung ein Verfahren zur Analyse von Daten vor, bei dem zunächst die unstrukturierten Daten in einen Datenspeicher eingelesen werden, anschließend die unstrukturierten Daten mit einer Strukturbeschreibung zur Identifizierung von Bestandteilen der unstrukturierten Daten verglichen werden und schließlich eine Adressierungslogik entsprechend den identifizierten Bestandteilen der umstrukturierten Daten initialisiert wird.

Die Erfindung basiert auf der Erkenntnis, daß nach Identifizierung von Bestandteilen innerhalb der unstrukturierten Daten eine dem Speicher vorgeschaltete, entsprechend den identifizierten Bestandteilen initialisierte Adressierungslogik einen Zugriff auf die Bestandteile ermöglicht, ohne daß die Datenbestandteile vorher aufbereitet, d.h. umsortiert werden müßten. Die Adressierungslogik legt Zeiger auf die unstrukturierten Daten, die das Auslesen der gewünschten Datenbestandteile sowie deren Weiterverarbeitung, beispielsweise Abspeichern in einem anderem Speichermedium, ermöglichen.

Um eine größtmögliche Variabilität bereitzustellen, kann vorgesehen werden, daß die aktuell gewünschte Strukturbeschreibung in einen Strukturbeschreibungsspeicher ladbar ist. Gemäß einer besonders bevorzugten Ausführungsform des erfindungsgemäßen Verfahrens werden mehrere Strukturbeschreibungsspeicher verwendet, die entweder mit derselben oder unterschiedlichen Strukturbeschreibungen geladen werden, wobei der Vergleichsschritt und der Initialisierungsschritt dann wiederholt ausgeführt werden. Hierbei ist es besonders vorteilhaft, wenn zu beliebiger Zeit zwischen verschiedenen Strukturbeschreibungen umgeschaltet werden kann. Die erwähnten verschiedenen Strukturbeschreibungen können jedoch insbesondere auch parallel oder zeitlich nacheinander auf die eingelesenen Daten angewendet werden.

Weitere Zeitersparnis ergibt sich, wenn mindestens zwei Datenspeicher vorliegen, wobei mindestens einer ladbar ist, während die bereits in einem der anderen Datenspeicher eingelesenen Daten analysiert werden.

Bei dem Datenspeicher handelt es sich bevorzugt um ein lineares Bit-Feld, insbesondere um einen bitorientierten RAM. Die identifizierten Bestandteile der Daten werden bevorzugt an einem Interface bereitgestellt. Hierbei kann in besonders vorteilhafter Weise vorgesehen werden, die identifizierten Bestandteile getrennt nach Wert des Bestandteils und Beschreibung des Bestandteils bereitzustellen.

Gemäß einem anderen Aspekt der vorliegenden Erfindung wird die obige Aufgabe auch gelöst durch eine Vorrichtung zum Analysieren von Daten mit einem Datenspeicher, in dem unstrukturierte Daten ablegbar sind, einem Strukturbeschreibungsspeicher, in dem eine Strukturbeschreibung ablegbar ist, einer Adressierungsschaltung, die ein gezieltes Zugreifen auf einzelne Bestandteile der Daten des Datenspeichers ermöglicht, einem Komparator, der einen Vergleich von im Strukturbeschreibungsspeicher abgelegten Daten mit im Datenspeicher abgelegten Daten ermöglicht und entsprechende Adressierungsinformation bezogen auf den Datenspeicher in der Adressierungsschaltung ablegt, und einem Register, das einerseits mit der Adressierungsschaltung verbunden ist und andererseits als Interface für Zugriffe auf die Daten im Datenspeicher von außen dient.

Gemäß einer bevorzugten Ausführungsform weist die erfindungsgemäße Vorrichtung mindestens einen weiteren Strukturbeschreibungsspeicher auf. Das Register kann ein Wertregister aufweisen, an dem der Wert eines identifizierten Bestandteils bereitstellbar ist, sowie ein Beschreibungsregister, an dem die Beschreibung des Bestandteils bereitstellbar ist.

In besonders bevorzugter Weise weist die erfindungsgemäße Vorrichtung einen Trigger-Komparator auf, der bei Auftreten mindestens eines bestimmten Bestandteils in den Daten und/oder bei mindestens einem bestimmten Wert eines Bestandteils in den Daten ein Trigger-Signal auslöst. Der Trigger-Komparator kann hierbei an ein Trigger-Register gekoppelt sein.

Gemäß einer Weiterbildung der erfindungsgemäßen Vorrichtung kann sie einen Strukturbeschreibungskomparator aufweisen, der mit dem Beschreibungsregister gekoppelt ist und in den mindestens eine Beschreibung eines Bestandteils ladbar ist, wobei mit dem Strukturbeschreibungskomparator ein Vergleich der in ihn geladenen Beschreibung mit den Beschreibungen im Beschreibungsregister durchführbar ist und im Falle eines positiven Vergleichs die Bereitstellung des mit der mindestens einen geladenen Beschreibung korrespondierenden Werts am Werteregister auslösbar ist. Dies ermöglicht die Ermittlung, ob ein bestimmter Bestandteil in den Daten vorhanden ist, sowie die Übergabe an ein entsprechendes Register und resultiert in dem Vorteil eines schnellen Zugriffs auf bestimmte Datenbestandteile bzw. Werte.

Bei einer besonders bevorzugten Ausführungsform ist zur Minimierung des zeitlichen Aufwands zur Bereitstellung der Daten vorgesehen, daß der Komparator und/oder der Strukturbeschreibungskomparator und/oder der Trigger-Komparator hardwaremäßig realisiert sind.

Bevorzugt ist die Adressierungslogik derart initialisiert, daß sie einen einheitlichen Zugriff auf die Daten im Datenspeicher, insbesondere einen Zugriff unabhängig von deren physikalischer Position im Datenspeicher ermöglicht.

Gemäß einer bevorzugten Ausführungsform ist die Adressierungslogik derart ausgebildet, daß sie die Daten, auf die zugegriffen wird, logisch ausrichtet und in ein vorbestimmtes, insbesondere einheitliches Format konvertiert.

Weitere vorteilhafte Weiterbildungen der Erfindung sind in den Unteransprüchen definiert.

Im folgenden werden Ausführungsbeispiele der Erfindung unter Hinweis auf die beigefügten Zeichnungen näher beschrieben. Es stellen dar:
- Fig. 1: in schematischer Darstellung eine aus dem Stand der Technik bekannte Vorgehensweise zur Aufbereitung von Daten;
- Fig. 2: eine schematische Blockschaltbilddarstellung zur Erläuterung einer ersten Ausführungsform des erfindungsmäßen Verfahrens; und
- Fig. 3: eine schematische Blockschaltbilddarstellung zur Erläuterung einer zweiten Ausführungsform des erfindungsmäßen Verfahrens.

Die vorliegende Erfindung wird im folgenden am Beispiel der Anwendung zum Analysieren von Telekommunikationsprotokollen beschrieben. Sie ist jedoch nicht darauf beschränkt, sondern läßt sich zur Aufbereitung beliebiger unstrukturierter Daten verwenden.

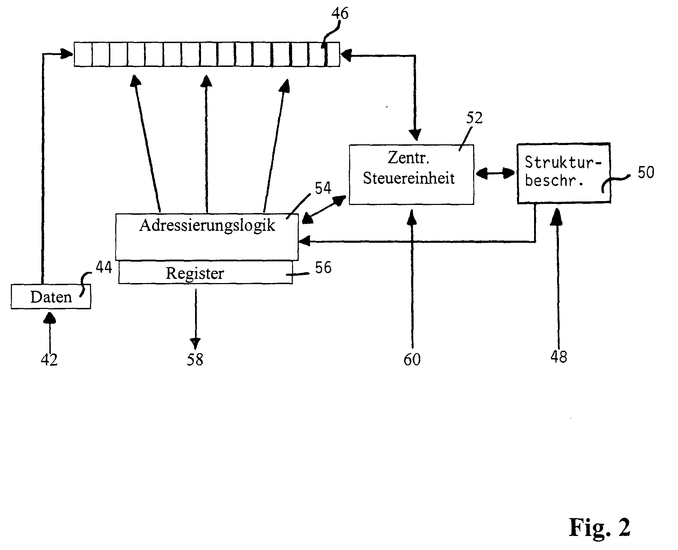

Fig. 2 zeigt eine erste Ausführungsform einer erfindungsgemäßen Vorrichtung. Über einen Eingang 22 werden Daten in unstrukturierter Form einem Dateninterface 44 zugeführt. Über das Dateninterface 44 werden die Daten ebenfalls in unstrukturierter Form sequentiell in einen Datenspeicher 46, vorzugsweise einen Bitorientierten RAM, eingelesen. Der RAM entspricht einem großen linearen Bit-Feld, ähnlich einem Schieberegister.

Ein Strukturbeschreibungsspeicher 50 enthält Informationen zur möglichen Struktur der Daten des empfangenen Bit-Stroms, beispielsweise eine Protokollbeschreibung. Das bedeutet, er enthält beschreibende Informationen, um Elemente des Bit-Stroms als Basiseinheiten, beispielsweise Bit, Byte, Word, Array usw. zu betrachten. Die Strukturbeschreibung enthält auch Entscheidungspunkte, sogenannte Abhängigkeiten (Dependencies), die bestimmen, welche Varianten einer Teilbeschreibung in Abhängigkeit vom Vorhandensein oder dem Wert bestimmter Datenbestandteile zu verwenden sind. Die Entscheidungspunkte umfassen Verzweigungsoder Wiederholungspunkte.

Eine derartige Strukturbeschreibung kann fest im Strukturbeschreibungsspeicher 50 abgelegt sein, sie kann jedoch auch bei Bedarf, insbesondere bei der Notwendigkeit des Anwendens unterschiedlicher Strukturbeschreibungen, über einen Eingang 48 in den Strukturbeschreibungsspeicher 50 geladen werden.

Eine zentrale Steuereinheit 52 mit einem Komparator führt einen Vergleich der Elemente der im Strukturbeschreibungsspeicher 50 abgelegten Strukturbeschreibung mit unstrukturierten Daten im Datenspeicher 46 durch und initialisiert eine Adressierungslogik 54 entsprechend den identifizierten Bestandteilen der Daten im Datenspeicher 46. Über ein Register 56 können die identifizierten Protokollbestandteile mit dem richtigen Typ, der richtigen Größe und mit weiteren Zusatzinformationen über einen Ausgang 58 ausgelesen werden. Das Auslesen über das Register 56 erfolgt durch einfache Operationen, sogenannte Word-Lese-Operationen. Hierbei wird eine automatische Anpassung der Größe (Bit-Anzahl), der Bit-Reihenfolge sowie des Alignments vorgenommen. Für den Zugriff auf die identifizierten Bestandteile kann die Adressierung in Form einer linearen Adressierung erfolgen, d.h. die Daten liegen direkt im Adressraum eines Verarbeitungsprozessors. Alternativ können jedoch auch Queues gebildet werden, so daß die Elemente Schritt für Schritt an einem Register ausgelesen werden können. Die erste Variante ist aufgrund ihrer hohen Geschwindigkeit und des wahlfreien Zugriffs bevorzugt, sie belegt jedoch einen großen Speicherbereich, da jedes Element, d.h. auch jedes einzelne Bit, als ein Integer-Register abgebildet wird.

Über einen Eingang 60 können der zentralen Steuereinheit 52 insbesondere vom Anwender Befehle zugeführt werden, beispielsweise zum Laden einer anderen Strukturbeschreibung, zum Laden eines neuen Datensatzes in den Datenspeicher 46, zur Bereitstellung bestimmter identifizierter Datenbestandteile durch das Register 56 etc.. Je nach geladener Strukturbeschreibung kann vorgesehen werden, daß bei der Analyse des nächsten Datensatzes ein Teil am Ende des vorhergehenden Datensatzes im Datenspeicher 46 beibehalten wird, um zu gewährleisten, daß Datenbestandteile, die mehr als ein Bit umfassen, d.h. deren Anfang in einem ersten Datensatz und deren Ende in einem darauffolgenden zweiten Datensatz liegt, ebenfalls identifiziert werden können.

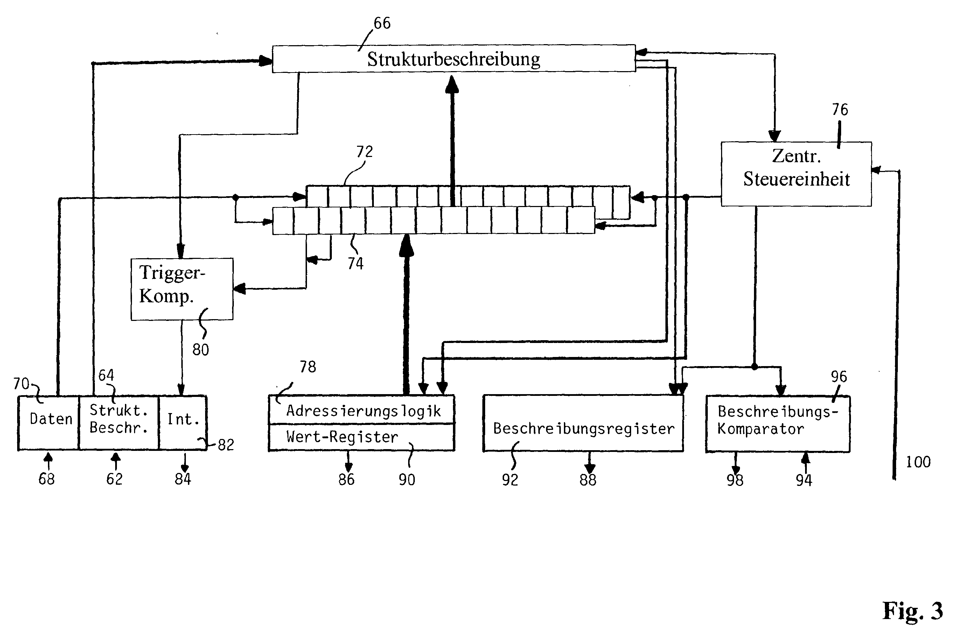

Fig. 3 zeigt ein weiteres Ausführungsbeispiel einer erfindungsgemäßen Vorrichtung. Über einen Eingang 62 eines zugehörigen Interfaces 64 können Strukturbeschreibungen in einen Strukturbeschreibungsspeicher 66 geladen werden. Daten werden in unstrukturierter Form über einen Eingang 68 eines Interfaces 70 an einen ersten bzw. einen zweiten Datenspeicher 72, 74 sequentiell übertragen.

Die Verwendung zweier Datenspeicher 72, 74 ermöglicht die Identifizierung, d.h. die Kodierung, von Bestandteilen der Daten eines der beiden Datenspeicher im Hintergrund, während im Vordergrund auf die bereits identifizierten Bestandteile des anderen Datenspeichers zugegriffen werden kann. Der Strukturbeschreibungsspeicher 66 kann so ausgelegt sein, daß mehrere verschiedene Strukturbeschreibungen in ihm abgelegt werden können, die beispielsweise seriell auf die in den Datenspeichern 72, 74 abgelegten Daten angewendet werden können. Er kann jedoch auch so realisiert sein, daß er mehrere Einzelspeicher umfaßt, wobei über die zentrale Steuereinheit 76 die jeweils gewünschte Strukturbeschreibung mit den Daten im jeweiligen Datenspeicher verglichen wird. Eine weitere Alternative besteht darin, daß nur ein Strukturbeschreibungsspeicher Verwendung findet, in den wunschgemäß unterschiedliche Strukturbeschreibungen geladen werden können, wobei der Strukturbeschreibungsspeicher ladbar sein kann, während der Datenspeicher ladbar ist, auf den diese Strukturbeschreibung dann anzuwenden ist.

Bei der Strukturbeschreibung kann es sich beispielsweise, wie erwähnt, um eine Protokollbeschreibung handeln, die neben den Schlüsselwörtern (Keywords), um die Struktur und die Abhängigkeiten der empfangenen Daten durch Beschreibungs-Identifikationskennzeichnen, sogenannte Description-IDs (ID = Identification) zu beschreiben, eindeutige Element-Identifikationskennzeichen, sogenannte Element-IDs enthält. Damit ist jedes Basiselement, beispielsweise Bit, Word, oder Array des Bit-Stroms referenzierbar. Zu beachten ist jedoch, daß bei variabel langen Datenbestandteilen die Position der nachfolgenden Elemente im Register nicht mehr bekannt ist. Die Zuordnung ist daher über die Beschreibungs-IDs herzustellen.
In einer Adressierungslogik 78 wird die Zugriffsinformation entsprechend den identifizierten Daten der Datenspeicher 72, 74 abgelegt. Es kann auch vorgesehen werden, daß die Daten nur in den Datenspeicher 72 geladen und dort analysiert werden. Nach erfolgter Analyse und entsprechender Initialisierung der Adressierungslogik werden die Daten vom Datenspeicher 72 in den Datenspeicher 74 geschoben, von wo aus sie unter Verwendung der Adressierungslogik ausgelesen werden.

Die Vorrichtung gemäß Fig. 3 verfügt über einen Trigger-Komparator 80. Die Signale, auf die zu triggern ist, können mit der Strukturbeschreibung geladen und aktiviert werden. Sofern also in der Strukturbeschreibung ein Trigger-Bit gesetzt wurde, d.h. daß ein Trigger ausgelöst werden soll, wenn ein bestimmter Datenbestandteil, beispielsweise eine bestimmte Beschreibungs-ID oder eine bestimmte Element-ID, in den zu analysierenden Daten auftritt, und dieses Trigger-Element vom Trigger-Komparator 80 im analysierten Datensatz tatsächlich erkannt wird, so wird über das Interface 82 am Ausgang 84 ein Interrupt ausgelöst. Der Ausgang 84 kann jedoch auch dazu verwendet werden, um die Beendigung einer Analyse anzuzeigen.

Für das Triggern auf mehrere Datenbestandteile sind mehrere Speicher für die vorzugebenden Datenbestandteile vorzusehen. Ebenso ist auch denkbar, Kombinationen zwischen verschiedenen Elementen-IDs und Beschreibungs-IDs durch logische Verknüpfungsoperationen, wie "und", "oder" bzw. "nicht", zu realisieren. Die Verknüpfung kann jedoch auch über Verarbeitungssoftware hergestellt werden, wenn jedes Triggerereignis separat gemeldet und übergeben wird.

Bei der vorliegenden Ausführungsform werden die identifizierten Datenbestandteile separat nach Wert, d.h. Element-ID, und Beschreibung, d.h. Beschreibungs-ID, an den Ausgängen 86, 88 bereitgestellt. Dabei stellt ein Wertregister 90 den Wert des Datenbestandteils bereit, während ein Beschreibungsregister 88 die zugehörige Beschreibung liefert. Wird auf eine bestimmte Beschreibungs-ID getriggert, kann über das Wertregister 86 die entsprechende Element-ID ausgelesen werden.

Über einen Eingang 94 kann einem Beschreibungskomparator 96 eine Beschreibungs-ID übergeben werden, um zu ermitteln, ob ein entsprechender Bestandteil in den zu analysierenden Daten aufgetreten ist. Die entsprechende Information wird an einem Ausgang 98 zurückgegeben.

Der Eingang 100 entspricht hinsichtlich seiner Funktion dem Eingang 60 von Fig. 2

Um eine besonders schnelle Verarbeitung sicherzustellen, sind in in besonders bevorzugten Ausführungsformen der Komparator, der Beschreibungskomparator 96 sowie der Trigger-Komparator 98 hardwaremäßig realisiert.

## Patentansprüche

1. Verfahren zur Analyse von Daten, folgende Schritte umfassend:
a) Einlesen der unstrukturierten Daten in einen Datenspeicher (46, 72, 74);
b) Vergleichen der unstrukturierten Daten mit einer Strukturbeschreibung zur Identifizierung von Bestandteilen der unstrukturierten Daten;
c) Initialisierung einer Adressierungslogik (54, 78) entsprechend den identifizierten Bestandteilen der unstrukturierten Daten.

2. Verfahren nach Anspruch 1,
**dadurch gekennzeichnet,**
**daß** vor Schritt a) die Strukturbeschreibung in einen Strukturbeschreibungsspeicher (50, 66) geladen wird.

3. Verfahren nach Anspruch 1 oder 2,
**dadurch gekennzeichnet,**
**daß** nach Schritt c) mindestens eine weitere Strukturbeschreibung in mindestens einen weiteren oder den Strukturbeschreibungsspeicher (50, 66) geladen wird und die Schritte b) und c) wiederholt ausgeführt werden.

4. Verfahren nach einem der vorhergehenden Ansprüche,
**dadurch gekennzeichnet,**
**daß** zu beliebiger Zeit zwischen verschiedenen Strukturbeschreibungen umgeschaltet werden kann.

5. Verfahren nach einem der vorhergehenden Ansprüche,
**dadurch gekennzeichnet,**
**daß** mindestens zwei Datenspeicher (72, 74) vorliegen, wobei mindestens einer (72; 74) ladbar ist, während die bereits in einem anderen Datenspeicher (74; 72) eingelesenen Daten analysiert werden.

6. Verfahren nach einem der vorhergehenden Ansprüche,
**dadurch gekennzeichnet,**
**daß** der Datenspeicher (46, 72, 74) ein lineares Bitfeld, insbesondere ein bitorientierter RAM ist.

7. Verfahren nach einem der vorhergehenden Ansprüche,
**dadurch gekennzeichnet,**
**daß** an einem Interface (56, 86, 88) identifizierte Bestandteile bereitgestellt werden.

8. Verfahren nach Anspruch 7,
**dadurch gekennzeichnet,**
**daß** die Bereitstellung der identifizierten Bestandteile getrennt nach Wert des Bestandteils und Beschreibung des Bestandteils erfolgt.

9. Verfahren nach einem der vorhergehenden Ansprüche,
**dadurch gekennzeichnet,**
**daß** parallel oder zeitlich nacheinander verschiedene Strukturbeschreibungen auf die eingelesenen Daten angewendet werden.

10. Vorrichtung zum Analysieren von Daten mit
einem Datenspeicher (46, 72, 74), in dem unstrukturierte Daten ablegbar sind,
einem Strukturbeschreibungsspeicher (50, 66), in dem eine Strukturbeschreibung ablegbar ist,
einer Adressierungsschaltung (54, 78), die ein gezieltes Zugreifen auf einzelne Bestandteile der Daten des Datenspeichers (46, 72, 74) ermöglicht,
einem Komparator, der einen Vergleich von im Strukturbeschreibungsspeicher (50, 66) abgelegten Daten mit im Datenspeicher (46, 72, 74) abgelegten Daten ermöglicht, und entsprechende Adressierungsinformation bezogen auf den Datenspeicher (46, 72, 74) in der Adressierungsschaltung (54, 78) ablegt, und
einem Register (56, 90), das einerseits mit der Adressierungsschaltung (54, 78) verbunden ist und andererseits als Interface für Zugriffe auf die Daten im Datenspeicher (46, 72) von außen dient.

11. Vorrichtung nach Anspruch 10,
**dadurch gekennzeichnet,**
**daß** sie mindestens einen weiteren Strukturbeschreibungsspeicher aufweist.

12. Vorrichtung nach Anspruch 10 oder 11,
**dadurch gekennzeichnet,**
**daß** sie mindestens einen weiteren Datenspeicher (74) aufweist, wobei mindestens einer ladbar ist, während die bereits in einem anderen Datenspeicher (72) eingelesenen Daten analysiert werden.

13. Vorrichtung nach einem der Ansprüche 10 bis 12,
**dadurch gekennzeichnet,**
**daß** der mindestens eine Datenspeicher (46, 72, 74) ein lineares Bitfeld, insbesondere ein bitorientierter RAM ist.

14. Vorrichtung nach einem der Ansprüche 10 bis 13,
**dadurch gekennzeichnet,**
**daß** das Register ein Wertregister (86) aufweist, an dem der Wert eines identifizierten Bestandteils bereitstellbar ist, und ein Beschreibungsregister (88), an dem die Beschreibung des Bestandteils bereitstellbar ist.

15. Vorrichtung nach einem der Ansprüche 10 bis 14,
**dadurch gekennzeichnet,**
**daß** sie einen Trigger-Komparator (80) aufweist, der bei Auftreten mindestens eines bestimmten Bestandteils in den Daten und/oder bei mindestens einem bestimmten Wert eines Bestandteils in den Daten ein Triggersignal auslöst.

16. Vorrichtung nach Anspruch 15,
**dadurch gekennzeichnet,**
**daß** der Triggerkomparator an ein Trigger-Register (82) gekoppelt ist.

17. Vorrichtung nach einem der Ansprüche 14 bis 16,
**dadurch gekennzeichnet,**
**daß** sie einen Strukturbeschreibungskomparator (96) aufweist, der mit dem Beschreibungsregister (92) gekoppelt ist und in den mindestens eine Beschreibung eines Bestandteils ladbar ist, wobei mit dem Strukturbeschreibungskomparator (96) ein Vergleich der in ihn geladenen Beschreibung mit den Beschreibungen im Beschreibungsregister (92) durchführ-bar ist und im Falle eines positiven Vergleichs die Bereitstellung des mit der mindestens einen geladenen Beschreibung korrespondierenden Werts am Werteregister (90) auslösbar ist.

18. Vorrichtung nach einem der Ansprüche 10 bis 17,
**dadurch gekennzeichnet,**
**daß** der Komparator und/oder der Strukturbeschreibungskomparator (96) und/oder der Triggerkomparator (80) hardwaremäßig realisiert sind.

19. Vorrichtung nach einem der Ansprüche 10 bis 18,
**dadurch gekennzeichnet,**
**daß** die Adressierungslogik (54, 78) derart initialisiert ist, daß sie einen einheitlichen Zugriff auf die Daten im Datenspeicher (46, 72, 74), insbesondere einen Zugriff unabhängig von deren Typ und deren physikalischer Position im Datenspeicher (46, 72, 74), ermöglicht.

20. Vorrichtung nach Anspruch 19,
**dadurch gekennzeichnet,**
**daß** die Adressierungslogik (54, 78) die Daten, auf die zugegriffen wird, logisch ausrichtet und in ein vorbestimmtes, insbesondere einheitliches Format konvertiert.
